# EUROPEAN PATENT APPLICATION

(11) **EP 4 623 858 A1**
(43) Date of publication of application: **01.10.2025**
(21) Application number: 24167197.3
(22) Date of filing: 28.03.2024
(51) Int. Cl.: A61C 7/08

(54) **METHOD AND APPARATUS FOR IMPARTING AT LEAST ONE ALTERNATIVE SHAPE TO AN ORTHODONTIC ALIGNER**

(71) Applicant: K Line Europe GmbH, 40589 Düsseldorf (DE)
(72) Inventor: Kandil, Sherif, 40474 Düsseldorf (DE)
(74) Representative: Kalkoff & Partner Patentanwälte mbB

(57) **Abstract**

The invention refers to a method of imparting at least one alternative shape to an orthodontic aligner having a first shape. In order to provide a simple and effective method for manufacturing an orthodontic aligner, said method comprises the steps of
- placing the orthodontic aligner on a holder in or adjacent to a treatment container,
- covering the orthodontic aligner at least partly with a barrier,
- setting a second stimulus condition for the orthodontic aligner into, and after the orthodontic aligner has adapted to the second stimulus condition,
- exerting pressure across the barrier on at least part of the orthodontic aligner to create a first alternative shape which is different from the first shape, and
- fixing the first alternative shape and releasing pressure after fixing.

Further, the invention comprises a treatment apparatus to conduct said method.

## Description

This patent application refers to a method and an apparatus for imparting at least one alternative shape to an orthodontic aligner.

An orthodontic aligner is known as a tool which is used to carry out a treatment plan for aligning the position of a tooth or a plurality of teeth. Such an orthodontic aligner is described e. g. in WO 2016/193 424 A1. The orthodontic aligner has a first shape, preferably the shape which allows the tooth to be corrected to achieve its final position. In order to facilitate use of the aligner, at least one alternative shape may be imparted to said orthodontic aligner, said at least one alternative shape to be imparted and released by a specific stimulus, said stimulus being e. g. heat or humidity or a specific pH value or a combination of such parameters. Preferably, the alternative shape is closer or has the same shape as the tooth to be corrected in its initial, non-corrected position.

Imparting at least one alternative shape to an orthodontic aligner requires complex manufacturing and it is an object of the invention to provide a simple and effective method and apparatus for this purpose.

The object is resolved by a method according to claim 1 and a treatment apparatus according to claim 7. Dependent claims are directed towards improved embodiments of the invention.

The method of imparting at least one alternative shape to an orthodontic aligner having a first shape, comprises the steps of
- placing the orthodontic aligner on a holder adjacent to or in a treatment container,
- covering the orthodontic aligner at least partly with a barrier,
- setting a second stimulus condition for the orthodontic aligner, and after the orthodontic aligner has adapted to the second stimulus condition,

- exerting pressure across the barrier on at least part of the orthodontic aligner to create a first alternative shape which is different from the first shape, and
- fixing the first alternative shape and releasing pressure after fixing.

It is a known process to change the shape of an orthodontic aligner which is made from SMP (shape memory polymer), said shape memory being linked to a specific temperature. A SMP made from e. g. PETG (glycol-modified polyethyleneterephtalate) or TPU (thermoplastic polyurethane) has a first stimulus, e.g a first temperature Tg1 at which the first shape of the orthodontic aligner is imparted and then fixed by e. g. cooling down said aligner. Forming the orthodontic aligner with a first shape can be done by thermoforming, 3-D-printing, injection molding, blow molding, rotational molding or pressure molding. The forming or molding is done at Tg1 and the first shape of the orthodontic aligner is memorized by the polymer or alloy from which it is made.

The invention is addressed to a method of imparting at least one alternative shape to an orthodontic aligner. The orthodontic aligner which has already been brought into its first shape is placed on a holder adjacent to a treatment container of a treatment apparatus or onto a holder in a treatment chamber of the treatment apparatus. The orthodontic aligner is covered at least partly with a barrier, said barrier being sealed to a pressure chamber of the treatment apparatus. This is to convey pressure created in the pressure chamber via the barrier evenly onto at least part of an orthodontic aligner. However, said barrier can also be used to either contain the stimulus around the orthodontic aligner or to prevent immediate contact between a medium used to create a stimulus in an orthodontic aligner and said orthodontic aligner. Alternatively, the barrier may be a model showing a negative of the alternative shape to be imparted to the orthodontic aligner which is mounted on the holder. Pressure will be exerted onto the model which imparts the alternative shape to the orthodontic aligner und pressure.

In order to impart an alternative shape which is stored in said orthodontic aligner in addition to the first shape, it is preferred that the orthodontic aligner is activated by a second stimulus, e. g. heated to a second temperature Tg2 which is preferably lower than Tg1. Once this stimulus has activated at least the part of the orthodontic aligner to which an alternative shape shall be imparted or the orthodontic aligner has been activated in total, pressure is exerted to at least part of the orthodontic aligner to impart an alternative shape and said alternative shape is then preserved by fixing the alternative shape of the aligner. Pressure is released after fixing which fixing is preferably done by cooling, either with or without using a cooling medium. A cooling medium may be liquid or gaseous e. g. cold water or cold air. The cooling medium may be applied to the orthodontic aligner e.g. by quenching, spraying or blowing. The distance covered by one re-shaping pass may be up to 1 mm, usually 0,2 to 0,7 mm.

Both, the first and the alternative shape are now stored in the memory of the orthodontic aligner with each shape being released upon subjecting the aligner again to the stimulus related to said shape.

A second alternative shape may be imparted by using e.g. temperature as a third stimulus, e. g. heating the orthodontic aligner above a temperature Tg2ₐ which is above room temperature but below Tg2, exerting pressure upon at least part of the dental aligner and then fixing the second alternative shape by e. g. cooling of the aligner. The second alternative shape, the alternative shape and the first shape of the orthodontic aligner will be released again upon providing the appropriate stimulus again, e. g. heating the orthodontic aligner again to the respective temperature ranging from Tg2ₐ to Tg1. Preferably, the first shape of the orthodontic aligner is a negative of the tooth or teeth to be re-positioned in its starting position while the alternative shape of the orthodontic aligner is a negative of the tooth or teeth to be re-positioned in a position closer to or in the target position. Alternatively, the last alternative shape imparted to the orthodontic aligner is a negative of the present position the tooth or teeth to be re-positioned and the first shape is a negative of the final position of the tooth or teeth to be re-positioned.

If temperature is used as a stimulus, typical ranges of temperature for Tg2ₐ, Tg2 and Tg1 may be between 30 °C and 150 °C. Common heat sources may be used to heat the orthodontic aligner, e. g. electric heating, heating by steam or gas, either directly or indirectly, heating by IR-radiation or by exposing the aligner to an electric or a magnetic field. Other stimuli may be a range of pH-values e. g. between pH 4,5 and pH 10 or a range of humidity e. g. between 5% and 90%. Further, ultraviolet (UV) light may be used as a stimulus to activate the SMP in order to allow for re-shaping of an orthodontic aligner by weakening the chemical bonds in the SMP.

According to the method of the invention, if temperature is applied as a stimulus, the first and any further raise of the temperature of the orthodontic aligner to Tg2 or Tg2ₐ can be applied by contact heating or by a liquid or gaseous medium, e. g. by a heating plate, an oven, a blower, by a water-bath or by steam or a combination of said means. Heat may be applied to the orthodontic aligner either in a treatment chamber of the treatment apparatus or adjacent to the treatment apparatus.

If other stimuli like e. g. pH-value, humidity or UV-light are being applied, the orthodontic aligner is preferably placed into the treatment chamber in order to better focus said stimuli on the aligner and also to contain the effect of the stimulus effectively.

Once the orthodontic aligner has adapted to the second stimulus condition or any further stimulus condition, pressure is exerted across the barrier on at least part of the orthodontic aligner to create a first alternative shape or a second or further alternative shape which is different from the first or any preceding shape. Pressure can be exerted by mechanic, hydraulic or pneumatic means. The barrier which may be a flexible diaphragm or a model of the alternative shape to be imparted to the orthodontic aligner, is placed at least across part of the aligner so that the pressure used to re-shape the aligner will not have any negative impact on the orthodontic aligner itself. Preferably, hydraulic or pneumatic pressure will be used if the barrier is an elastic diaphragm. The diaphragm is pressed onto the orthodontic aligner which then molds on the dental model onto which it is mounted. The dental model forms a negative of the alternative shape to be imparted onto the orthodontic aligner. Mechanical pressure can preferably be used when the orthodontic aligner is mounted on the holder and a dental model showing a negative of the alternative shape to be imparted to the orthodontic aligner is place above the aligner. Mechanical means, e. g. a plunger may then press the dental model down onto the orthodontic aligner.

Once the alternative shape has been created, this shape needs to be fixed. Fixing can be done by maintaining pressure while waiting until the orthodontic aligner cools down from Tg2 or Tg2ₐ or any other raised temperature used to stimulate the aligner to room temperature. Cooling can be done simply by waiting although for industrial processing cooling is preferably forced by exposing the orthodontic aligner to e. g. cooling gas or cooling liquid, for example a cold air blower or immersing the aligner in cold water. Once temperature is down, the alternative shape is fixed in the shape memory polymer and pressure can be released. Forced cooling may preferably be done at a rate of at least 5 to 10°C/min to speed up the re-shaping process of the orthodontic aligner. Forced cooling may be done at a rate of 10 to 50 °C/min maximum, preferably 20 to 25 °C/min without damaging the orthodontic aligner. If other stimuli have been applied, fixing requires to remove the specific pH-value, specific humidity or UV-light or the effects caused by these stimuli in the orthodontic aligner.

As already outlined above, the imparting of an alternative shape to the orthodontic aligner may be repeated with a different stimulus to impart yet another alternative shape to said orthodontic aligner. After imparting a first alternative shape the orthodontic aligner this may be done by leaving the orthodontic aligner on said holder or model, respectively or changing to a different holder or model, repeating the step of covering the orthodontic aligner at least partly with a barrier, setting a third stimulus condition in the treatment container, and, after the orthodontic aligner has adapted to the third stimulus condition, exerting pressure on at least part of the orthodontic aligner to create a second alternative shape which is different from the first and the first alternative shape, and fixing the second alternative shape thus imparting a second alternative shape. This process may be repeated.

According to a preferred embodiment of the method according to the invention, multiple alternative shapes are imparted consecutively to the orthodontic aligner. For each of these multiple alternative shapes, a different stimulus, e. g. a different temperature, pH-value or humidity, a different electric or magnetic field or a different infrared ultraviolet wavelength has to be used. Each of the multiple alternative shapes will be stored in the SMP or SMA and will be released once the stimulus that allowed for storing the alternative shape is applied again to the orthodontic aligner.

The mechanical, hydraulic or pneumatic pressure to be used to re-shape the orthodontic aligner may be applied at least to a part of said aligner which needs re-shaping in order to improve the re-positioning of a tooth.

A treatment apparatus for imparting at least one alternative shape to an orthodontic aligner comprises
- a treatment container, said treatment container having a pressure chamber,
- a holder for an orthodontic aligner, placed in or adjacent to the treatment container,
- a barrier to at least partly cover the orthodontic aligner,
- conditioning means for setting a stimulus condition for the orthodontic aligner,
- pressure means for exerting pressure on at least part of the orthodontic aligner.

The treatment apparatus may comprise a number of means designed to support the process of imparting an alternative shape to an orthodontic aligner. First, the treatment apparatus comprises a treatment container which has at least a pressure chamber. Said pressure chamber comprises a barrier which forms at least part of a wall of the pressure chamber and which barrier is sealed to the pressure chamber and is arranged adjacent to the orthodontic aligner. Optionally, the treatment container may also comprise a treatment chamber which is arranged next to the pressure chamber. During treatment of the orthodontic aligner, the treatment chamber is usually closed in order to maintain specific stimulus or treatment conditions like e. g. a specific temperature, pH-value, humidity or UV-light. The treatment container may be made of any material which is resistant to the treatment conditions, typically it is made of glass, metal or plastic material. A transparent material is preferred especially for the treatment chamber as it facilitates visual control of the process.

Then, the treatment apparatus comprises a holder for the orthodontic aligner, either for the aligner itself or, in a preferred version, for a negative model of the alternative shape to be imparted to the orthodontic aligner. Said orthodontic aligner is then placed onto the model. The holder may comprise a must-fit element which coordinates with a counter element on the orthodontic aligner or the model in order to allow for fast mounting of the orthodontic aligner or the model onto the holder. Mounting or changing of the aligner or the model may be done manually or automatically. Optionally, the treatment chamber has a sealable opening or a door through which the orthodontic aligner may be placed onto the holder in the treatment chamber. Alternatively, the holder may be arranged adjacent to the treatment container, preferably below the treatment container. Preferably, the holder is placed adjacent to the barrier.

The treatment apparatus further comprises a barrier designed to cover at least part of the orthodontic aligner. The barrier is arranged in at least part of a wall of the pressure chamber; preferably it forms a wall of the pressure chamber. The barrier may be a diaphragm or a model of a negative of the alternative shape to be imparted to the orthodontic aligner. A diaphragm is usually resistant to the treatment conditions applied to the orthodontic aligner. It is in most cases an elastic diaphragm, e. g. of silicone or of natural or synthetic rubber. The diaphragm is designed to put pressure onto the orthodontic aligner. The diaphragm may optionally be permeable or pervious for stimuli, e.g. for humidity, acidic or alkaline media for the adjustment of a specific pH-value and/or UV -light but also for IR-light or an electric or magnetic field. The barrier is preferably held in mounting elements so that the barrier can be changed easily to adapt to different shaping requirements for e. g. shaping different orthodontic aligners or alternative shapes to be imparted to the orthodontic aligners or to be replaced.

If the pressure increases in the treatment container, the diaphragm molds seamlessly to the orthodontic aligner, thereby pressing the orthodontic aligner to the dental model situated below the orthodontic aligner and carrying the negative of the alternative shape. Alternatively, the diaphragm may press onto the dental model situated upon the orthodontic aligner, said dental model pressing its negative of the alternative shape to the orthodontic aligner. The negative model of the alternative shape to be imparted to the orthodontic aligner may thus be a lower and/or an upper model of the orthodontic aligner, depending on the placing of the model below or above the orthodontic aligner. The model may be e. g. a cast or a 3-D-print of the alternative shape to be imparted to the orthodontic aligner. The model, preferably a lower model, may have a must-fit-element which allows for fitting the model easily to the holder.

An essential part of the treatment apparatus are conditioning means which are required in order to create a stimulus for the orthodontic aligner. Said conditioning means may comprise heating means, means to adjust humidity in the treatment container, a source of UV-light, and/or means to adjust a pH-value. The treatment apparatus may comprise only one of said conditioning means or a plurality of said conditioning means. Typically, heating means can be arranged outside the treatment container, e.g. as a holder that can be heated. The treatment apparatus may e. g. comprise heating means outside the treatment chamber and means to adjust the humidity within the treatment chamber. The treatment chamber is usually a closed chamber with the holder carrying the orthodontic aligner fitting into a bottom or side wall of the treatment chamber. Conditioning means may also be mounted in the pressure chamber with the stimulus permeating the barrier in order to stimulate the orthodontic aligner, e. g. if humidity, UV-light or temperature applied as a stimulus.

If heating means are employed as conditioning means to stimulate the orthodontic aligner, conductive and/or radiative heating means may be used, e. g. heated liquid (water, oil) or steam or another heating gas may circulate in a heating element or be applied directly to the orthodontic aligner or radiation sources like halogen bulbs or IR-sources like IR-LEDs heating filaments, PTC elements, ceramic heaters or Peltier ceramics or electric or magnetic fields may be used to heat an orthodontic aligner at least in part. Electricity may be used for heating. The heating means may be single heating means to heat the entire orthodontic aligner or they may be composed of a plurality of heating segments so that specific parts of the orthodontic aligner may be heated separately. Typical temperatures to activate orthodontic aligners are between 30 °C and 150 °C, preferably 40 °C to 120 °C.

The pressure means are also an essential part of the treatment apparatus. The pressure means can be chosen from means to exert mechanical, hydraulic or pneumatic pressure. The pressure means are arranged to exert pressure on at least part of the orthodontic aligner to impart an alternative shape to said aligner. The pressure means may be chosen from a piston or a punch but also from a liquid or a gas which may be pressurized. Preferably, the pressure is exerted across the diaphragm but pressure can also be exerted on part or on the whole of the orthodontic aligner via a model placed between the pressure means and the orthodontic aligner. If mechanical pressure is applied, e. g. via a piston or a punch, across a diaphragm, said diaphragm may be permeable for conditioning means to be applied from the pressure chamber via diaphragm to the orthodontic aligner.

The treatment apparatus preferably comprises fixing means for fixing at least one alternative shape of the orthodontic aligner. Fixing means are designed to return the material of the orthodontic aligner back to normal which has previously been stimulated for re-shaping. While for some stimuli it is sufficient to stop stimulating the orthodontic aligner, for other stimuli, e. g. temperature, fixing of the orthodontic aligner is required as the material of the orthodontic aligner needs time to return to a lower temperature. Pressure means are preferably keeping the orthodontic aligner pressed to the dental model during fixing. In order to stabilize the alternative shape imparted during treatment in the treatment apparatus, said apparatus optionally comprises fixing means, usually means to cool the orthodontic aligner, e. g. with a cooling liquid or with a cooling gas if temperature has been used as a stimulus. The fixing means may be a cooling bath, a refrigerator, a blower to induce a forced air flow or Peltier ceramic elements. Peltier ceramic elements are advantageous because they can be used alternately to heat and to cool the orthodontic aligner. The orthodontic aligner may be cooled to a temperature which is significantly lower than activation temperature Tg (stimulus), usually creating a temperature difference compared to the activation temperature of at least 20°C, preferably at least 50°C. Preferably, a cooled orthodontic aligner has a temperature between 20°C and 40°C.

In a preferred embodiment of the invention, the treatment apparatus comprises at least one sensor to monitor temperature, humidity, pressure, pH-value, IR- or UV-light or electric or magnetic fields or a plurality of said parameters. Often, at least two sensors are provided to monitor process conditions in the treatment container. A sensor may be connected to a control unit described below in order to monitor parameters like e. g. temperature, humidity, pH-value, radiation or electric or magnetic fields in the treatment container. A sensor may also be employed to indicate failure of the treatment or a dangerous situation of the treatment apparatus like overheating or a lack of or an excess of humidity. A sensor might further be employed to check on the condition of the orthodontic aligner, e. g. to check on progress of re-shaping.

A further preferred embodiment of the invention shows a treatment apparatus which is equipped with a control unit to control time, stimulus, condition of the medium to impart the stimulus, condition of the orthodontic aligner, pressure application and /or fixing of the orthodontic aligner. The control unit is usually connected to the at least one sensor and is able to read the sensor signals. The control unit may contain a storage unit in which at least one treatment design is stored, said treatment design comprising data regarding time, stimulus, condition of the medium to impart the stimulus, pressure application and fixing parameters. The control unit may further be equipped with a processor allowing to compare data from a sensor with a treatment program for an orthodontic aligner and to adjust parameters in the treatment container to allow for an optimum treatment of the orthodontic aligner.

All of the features discussed above may be combined individually to create a treatment apparatus which is adapted to a specific type of orthodontic aligner or to a specific stimulus or a combination of stimuli.

Details of the method and treatment apparatus according to the invention are explained hereinafter with reference to the figures:
- Fig. 1a: a schematic representation of a first embodiment of the treatment apparatus without orthodontic aligner
- Fig. 1b: a schematic representation of a first embodiment of the treatment apparatus with an orthodontic aligner
- Fig. 1c: a schematic representation of a second embodiment of the treatment apparatus
- Fig. 1d: a schematic representation of a third embodiment of the treatment apparatus
- Fig. 2a: a schematic representation of a pre-heating container of the treatment apparatus
- Fig. 2b: a schematic representation of a treatment container of the treatment apparatus
- Fig. 3a: a schematic representation of a cooling container independent of the treatment apparatus
- Fig. 3b: a schematic representation of a cooling unit integrated into the treatment apparatus
- Fig. 4: a schematic representation of an embodiment of the method according to the invention

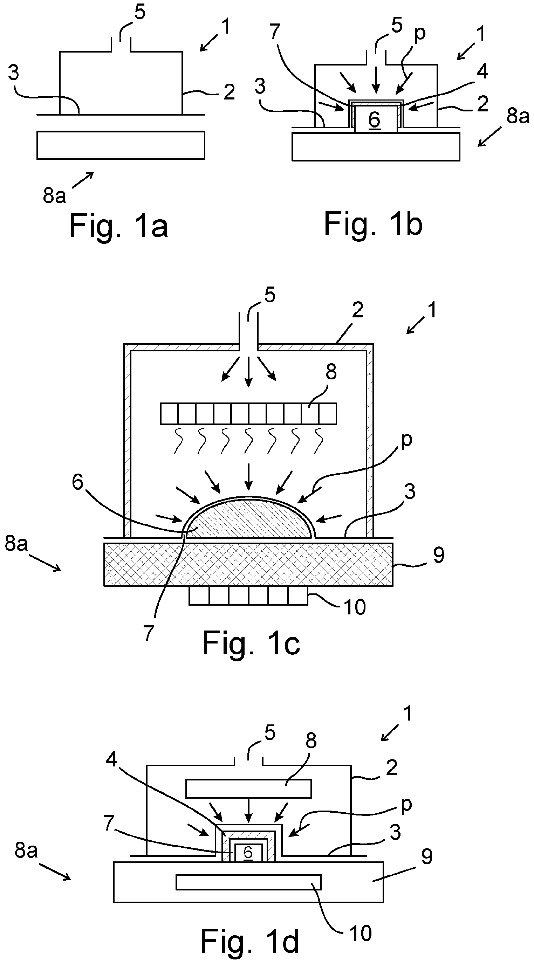

Figs. 1a and 1b show a first embodiment of the treatment apparatus according 1 to the invention. Figs. 1c and 1d show second and third embodiments of the treatment apparatus 1. While the treatment apparatuses 1 of Figs. 1 to 4 have basic construction elements in common, they differ in details. Thus, in Figs. 1 to 4 same referral numbers will be used for identical components for all embodiments.

With regard to Fig. 1a-d, the treatment apparatus 1 comprises a treatment container 2 which is made of e. g. metal, glass, ceramics or any synthetic material that is able to withstand the treatment parameters comprising the pressure, temperature generated by liquids, steam or gas, the humidity, an electric or magnetic field, IR- and UV-light and/or the pH-value or any combination of said treatment parameters which will apply during the treatment of an orthodontic aligner. It is preferred that the treatment container 2 is made at least in part of a transparent material in order to allow for a visual inspection of the process.

The treatment container 2 comprises a pressure chamber 2a and optionally a treatment chamber not shown in Figs. 1a-d.

One side of the pressure chamber 2a, preferably the bottom, comprises a diaphragm 3 which is sealed to the pressure chamber 2a or to a wall thereof. The diaphragm 3 is made from an elastic material, e. g. natural or synthetic rubber or silicon. Fig. 1a shows a relaxed diaphragm 3 forming a bottom wall of the pressure chamber 2a. Fig. 1b shows an extended diaphragm covering part of the orthodontic aligner. The material may be chosen and dimensioned to withstand the treatment parameters cited-above which may apply during treatment. Said diaphragm 3 acts as a barrier which covers at least part of an orthodontic aligner 4 and which optionally screens the orthodontic aligner from the medium that brings pressure onto the aligner 4 during treatment. As an alternative barrier, a dental model for shaping the orthodontic aligner 4 may be used.

The pressure chamber 2a preferably has at least one opening 5 which is used as a conduit for a medium which is used to increase or release pressure in said pressure chamber 2a. The opening 5 may be used for a medium suitable to create hydraulic or pneumatic pressure, e. g. a liquid or a gas which urges the diaphragm 3 to cover the orthodontic aligner 4 at least in part and to exert pressure onto the orthodontic aligner 4 in order to re-shape it. Optionally, the pressure chamber 2a is filled with a gaseous or liquid medium and the treatment apparatus 1 is designed to have the volume of the pressure chamber 2a changeable, e.g. by having one wall built as a plunger. Alternatively, a plunger may be used as a medium to apply mechanical pressure. If mechanical pressure is used, it is preferred that instead of a diaphragm 3 a solid barrier is sealed to the pressure chamber 2a or into a wall of the pressure chamber 2a, for example a dental model made from e. g. gypsum or 3-D-printing material is used to transfer pressure from the plunger to the barrier and then to the orthodontic aligner 4. Pressure may be set from 1 bar to 10 bar, usually between 3 bar and 7 bar, depending on the structure of the treatment apparatus 1 or the material of the diaphragm 3. In the embodiments according to the invention, the pressure was set to 5 bar. Pressure is set and maintained by e. g. valves opening or closing the opening 5. Maintaining the correct pressure is essential for optimal re-shaping of the orthodontic aligner 4.

Adjacent to the diaphragm 3, in Figs. 1a-d a holder 6 is part of the treatment apparatus 1. The holder 6 is designed to hold the orthodontic aligner 4, usually with a must-fit-mechanism which allows for an easy mounting of the aligner 4 or a dental model 7. Preferably, the holder 6 is designed to stabilize the orthodontic aligner 4 so that only that change of shape into at least one alternative shape occurs during the treatment which is intended to happen in order to re-shape the orthodontic aligner 4. The holder 6 may alternatively be designed to hold a model 7 of the alternative shape to be imparted to the orthodontic aligner 4. The orthodontic aligner 4 will then be mounted on said model 7 in order to be re-shaped into an alternative shape.

Further, the treatment apparatus 1 according to Fig. 1 a to d comprises heating means. At least one heating element 8 forms part of the treatment apparatus 1 (Fig. 1a), preferably also further heating elements 8a (Fig. 1c, 1d). Said heating element 8 may be placed in the treatment container 2 or adjacent to the treatment container 2, e. g. below the holder 6, it may also form part of the wall of the treatment container 2. The heating elements 8, 8a might be arranged to heat either the orthodontic aligner 4 and/or the medium used to put the orthodontic aligner 4 under pressure so that said medium can transfer heat via the diaphragm 3 to the orthodontic aligner 4. Thus, the medium to be used is preferably heat conducive. A heating element 8, 8a usually comprises a heater which may be powered electrically or by e. g. thermo-oil. The heating element 8, 8a preferably comprises a porous element 9 which is made from heat conducive material, usually metal. Heating may start prior or after building pressure in the treatment container 2 and will be built to the required temperature which will then be held even to allow for optimal re-shaping of the orthodontic aligner 4. According to a preferred embodiment, pressure is monitored, preferably in real-time, by a sensor and is adjusted once the treatment container 2 is heated.

Fig. 1a shows a heating element 8a which is arranged adjacent to the diaphragm 3 and which comprises porous element 9 into which a heater (not shown) is inserted. On the porous element, the holder 6 with the dental model 7 and the dental aligner 3 are mounted (see Fig. 1b). The heating element 8a with the porous element 9 imparts heat towards the holder 6, the dental model 7 and the orthodontic aligner 4 as well as the diaphragm 3 and thus across the diaphragm 3 to the medium used to put pressure onto the orthodontic aligner 4. In the treatment apparatus 1 shown in Fig. 1a, pneumatic or hydraulic pressure may be applied.

Fig. 1c shows a heating element 8 comprising a porous element 9 and a heater 10 which is arranged below the porous element 9. The heating element 8 is arranged adjacent to the diaphragm 3. Said heating element 8 comprises a porous element 9 which is similar to porous element 9 of Fig. 1a but with a heater 10 which is shown below the porous element 9. The embodiment of the treatment apparatus 1 shown in Fig. 1c has a further heating element 8a which is arranged within the treatment container 2, here shown above the diaphragm 3 and orthodontic aligner 4. The further heating element 8a comprises a heater (not shown) which is surrounded by porous element 9. The medium used to put pressure on the diaphragm 3 and thus on the dental aligner 4 passes through the porous element 9 and thereby carries heat towards the diaphragm 3 and the dental aligner 4. Heating element 8 heats the orthodontic aligner 4 by radiating heat through holder 6 and dental model 7. Thus, the orthodontic aligner 4 is heated to a temperature suited to impart an alternative shape.

Fig. 1d shows a treatment apparatus 1 with a heating element 8 adjacent to the diaphragm 3, said heating element comprising a heater 10 covered by a porous element 9. Thus, the embodiments of treatment apparatus 1 shown in Figs. 1a-d all comprise a heater which is integral to the treatment container 2.

According to a preferred embodiment (not shown), the holder 6 is placed into a treatment chamber which forms part of the treatment container 2 and which is usually arranged adjacent to the diaphragm 3. A treatment chamber is useful, especially if stimuli other than temperature, e. g. pH-value, humidity 04 UV-light are being used. These stimuli are easier to handle in a contained environment. Thus, the treatment chamber is preferably equipped with an opening for entering and removing the orthodontic aligner 4, said opening is preferably equipped with a closing device. The treatment chamberis usually equipped with stimulating means like means for heating, means for radiating UV-light or IR-light, means to create an electric or a magnetic field, means for adjusting humidity or means to provide a specific pH-value.

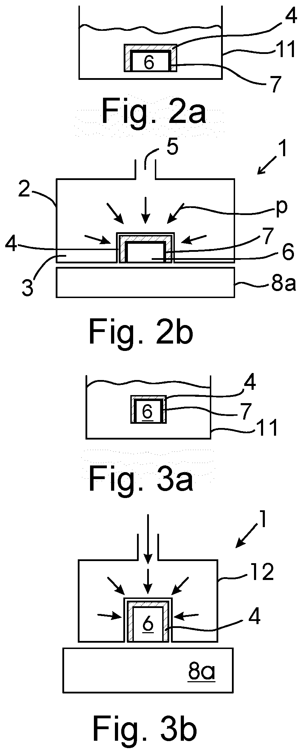

Figs. 2a and 2b show a treatment apparatus 1 which comprises a treatment container 2 in Fig. 2b and in addition a separate pre-heating container 11 in Fig. 2a. Said pre-heating container 11 is made from heat resisting material, e. g. metal or glass or synthetic material or a combination thereof. The pre-heating container 11 is further equipped with a heating element 8 which may be incorporated into the pre-heating container 11 or which may be placed adjacent said container 11, e. g. below said container. In use, the pre-heating container 11 is at least partly filled with a heat conductive medium which may be e. g. liquid or gaseous, typically water or oil or hot air. The orthodontic aligner 4 which is to be re-shaped is then placed into the pre-heating container 11, preferably mounted on the dental model 7. Upon heating the orthodontic aligner 4 to the temperature required for imparting an alternative shape, the orthodontic aligner 4 is removed from the pre-heating container 11 and is transferred to the treatment container 2 to be re-shaped. The treatment container 2 may be any of e. g. treatment containers of Figs. 1a-d.

The orthodontic aligner 4 requires fixing of the alternative shape. This is usually done by cooling with the treatment chamber used as a cooling unit 12 as shown in Fig. 3b. As an alternative, Fig. 3a shows a schematic representation of separate cooling unit 12. Said cooling unit 12 may complement the treatment apparatus 1 for cooling down the orthodontic aligner 4 once an alternative shape has been imparted thereto. The cooling unit 12 is a container designed to accommodate the orthodontic aligner 4, preferably on a holder 6, and a cooling medium suited to reduce the temperature of the aligner 4. The cooling medium may be gaseous like e. g. cooled air or liquid like cooled water or oil. Usually, the cooling medium is moved in order to efficiently reduce the temperature of the aligner. Preferably, during the cooling operation, the orthodontic aligner 4 is still joined with an upper or a lower dental model to retain the alternative shape just imparted to said aligner 4. At the end of cooling, pressure can be released e. g. by removing a dental model from the re-shaped orthodontic aligner 4.

After cooling, the orthodontic aligner 4 retains at least two shapes, a first shape and at least one alternative shape. Each of said shapes can be released by exposing the orthodontic aligner 4 to the temperature Tg1, Tg2 or Tg2a used to impart said shape to the orthodontic aligner4.

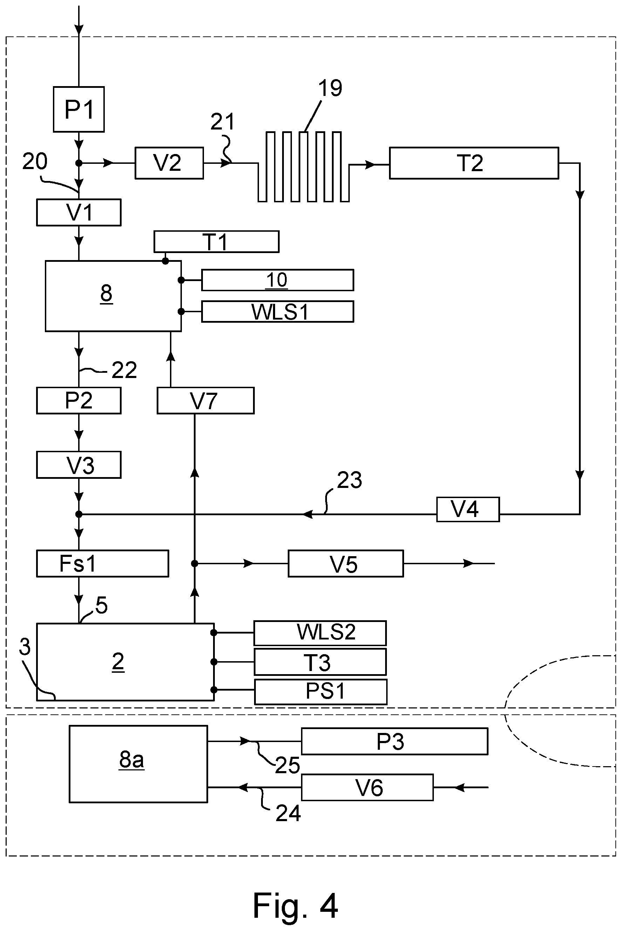

Fig. 4 shows a schematic representation of the method and the apparatus according to the invention. Fig. 4 describes the working of a method and an apparatus designed to use heated water as a stimulus. The device uses the treatment container 2 for heating and for cooling the dental aligner. A control unit (not shown) receives signals from various sensors, namely temperature sensors, pressure sensors, liquid level sensors and a flowmeter. Said signals are compared by said control unit to a stored set of parameters describing treatment conditions and the control unit will then send signals to start or stop components of the treatment apparatus, e. g. pumps, valves, heating elements and cooling elements or to adjust said components to an optimum level.

In this embodiment water is used as a fluid and a medium to convey temperature as a stimulus. A treatment container 2 is in fluid communication with a heating fluid and a cooling fluid. Water is drawn by means of pump P1, said pump P1 directing the water to either a heating element 8 or a cooling element 19 with a valve V1 opening or closing a conduit 20 from the pump P1 to the heating element 8 and a valve V2 opening or closing a conduit 21 from the pump P1 to the cooling element 19. The heating element 8 is provided with a temperature sensor T1 and the cooler is provided with a temperature sensor T2.

The heating element 8 is equipped with a heater (not shown) and a water level sensor WLS 1. Cooling element 19 is provided with a cooler (not shown). The heater and cooler are activated or stopped by the control unit if a preset temperature has not yet been reached or has been reached, respectively. Preferably, the heating element 8 and the cooling element 19 comprise a mixer (not shown) so that the water moves around the heating or cooling element 8, 19.

A pump P2 pumps heated or cooled water to the treatment container 2 via conduits 22 or 23. Said conduits 22 or 23 may be opened or closed by valves V3, V4, respectively. A flow-sensor FS1 is inserted into conduits 22 and 23 to monitor the amount of fluid added to the treatment container 2. The conduits 22 and 23 end at the at least one opening 5 of the treatment container 2. The treatment container 2 has a housing of metal and glass and the bottom comprises a silicon diaphragm 3. The treatment container is equipped with a temperature sensor T3, with a pressure sensor PS1 and with a water level sensor WLS2.

Below and adjacent to the diaphragm 3, a heating element 8a comprising a porous metal bar with a closed outer shell is positioned. Said heating element 8a comprises an inlet 24 for heated air into which a valve V6 is inserted. A vacuum pump P3 is linked to an outlet 25 to evacuate heated air from the heating element 8a. A holder (not shown) is arranged on top of the heating element 8a, said holder is mounted with an orthodontic aligner or with a dental model upon which an orthodontic aligner is mounted. All sensors and all pieces of equipment are linked with a control unit (not shown).

Said apparatus may be used as described hereinbelow: A file containing treatment parameters for a specific orthodontic aligner is stored in the control unit. Upon start of the treatment apparatus 1, pump P1 pumps water into the heating element 8 via open valve V1 with valve V2 remaining closed. Heating element 8 is filled with water to at least a preset level which is confirmed by water level sensor WLS1. The heating element 8 further comprises a heater 10 and a mixer (not shown), so that water can be heated to a preset temperature Tg2 or Tg2a, Tg2 being the required temperature for the first alternative shape, Tg2a being the required temperature for the second alternative shape. This is monitored by temperature sensor T1. Once the water has the preset temperature, pump P2 is switched on to pump heated water through an open valve 3 into the treatment container 2. A flow sensor FS1 monitors the amount of heated water streaming into the treatment container 2. Pump P2 is able to bring pressure upon the treatment container 2, thereby causing the diaphragm 3 to expand.

The heating element 8a is heated also by hot air, preferably by pressurized hot air, thereby heating the orthodontic aligner to a temperature Tg2 or Tg2a. Vacuum pump P3 draws hot air into the heating element 8a once valve V6 is opened. The orthodontic aligner, which is preferably mounted on a dental model showing the shape to be imparted to the orthodontic aligner. The expanding diaphragm 3 shapes over the orthodontic aligner and brings a pressure of up to 10 bar to the aligner which can be shaped after reaching a temperature Tg2 or Tg2a which is below Tg1 and which may be in the range from 30°C to 150°C. Once the preset time for releasing a preset pressure at a preset temperature onto the orthodontic aligner, pump P2 stops, valve V3 closes and valve V5 opens to drain the treatment container 2. Alternatively, valve V7 opens to empty the treatment container 2 into the heating device 8. The diaphragm 3 relaxes as pressure reduces. Once the treatment container 2 has been drained, pump P1 starts to pump water via opened valve V2 (valve V1 being closed) to the cooling element 19 to cool the water to a temperature which is at least 20°C lower than the temperature during imparting an alternative shape to the orthodontic aligner. The diaphragm 3 expands again thereby not only bringing pressure onto the orthodontic aligner but also cooling the orthodontic aligner with a rate between 5 °C/min to 50°C/min, preferably between 10 °C to 25 °C. Cooling fixes the alternative shape which has been imparted to the orthodontic aligner after heating and during pressing. Cooling may also be done by replacing the heated water continuously with cooled water in order to maintain a constant pressure. Once the orthodontic aligner has reached ambient temperature (typically less than 30°C), the alternative shape has been committed to the shape memory of the orthodontic aligner. An orthodontic aligner can keep a plurality of shaped memorized and each shape can be released upon heating the orthodontic aligner by heating it to the temperature Tg1, Tg2 or Tg2a at which said shape has been imparted thereto. Upon reaching ambient temperature, valve 5 opens and the cooled water is drained from the treatment chamber 2. The diaphragm 3 relaxes and the orthodontic aligner may be removed from the treatment apparatus 1.

Preferably, the treatment apparatus 1 comprises a sensor indicating if and which orthodontic aligner is received in the holder in order to open the correct file matching said orthodontic aligner. Placing and mounting the orthodontic aligner or the dental model to the holder can be done manually or automatically.

All signals are conveyed to the control-unit in real-time. The control unit receives all signals and sends corresponding signals to the components of the treatment apparatus after comparing the real-time signals with the pre-set parameters of the file belonging to the orthodontic aligner which is about to receive an alternative shape. The method is simple and efficient.

### Reference List

- 1: treatment apparatus
- 2: treatment container
- 2a: pressure chamber
- 3: diaphragm
- 4: orthodontic aligner
- 5: opening
- 5a: second opening
- 6: holder
- 7: model
- 8: heating element
- 8a: further heating element
- 9: porous element
- 10: heater
- 11: pre-heating container
- 12: cooling unit
- 13: liquid medium
- 14: gaseous medium
- 15: removal opening
- 15a: removal opening
- 16: aligner opening
- 17: apron
- 18: fitting
- 19: cooling element
- 20: conduit pump P1 to heater 10
- 21: conduit pump P1 to cooler 19
- 22: conduit heater to treatment container 2
- 23: conduit cooler to treatment container 2
- 24: inlet
- 25: outlet

- P: direction of pressure
- P1, P2, P3: Pump
- V1, V2, V3, V4, V5, V6, V7: Valves
- T1, T2, T3: temperature sensor
- WLS1, WLS2: water level sensor
- PS1: pressure sensor
- FS1: flow sensor

## Claims

1. Method of imparting at least one alternative shape to an orthodontic aligner (4) having a first shape, said method comprising the steps of
- placing the orthodontic aligner (4) on a holder (6) in or adjacent to a treatment container (2),
- covering the orthodontic aligner (4) at least partly with a barrier (3),
- setting a second stimulus condition for the orthodontic aligner (4) , and after the orthodontic aligner (4) has adapted to the second stimulus condition,
- exerting pressure across the barrier (3) on at least part of the orthodontic aligner (4) to create a first alternative shape which is different from the first shape, and
- fixing the first alternative shape and releasing pressure after fixing.

2. Method according to claim 1, wherein after imparting a first alternative shape, a second alternative shape is imparted to the orthodontic aligner (4) by leaving the orthodontic aligner (4) on said holder (6) or changing to a different holder, repeating the step of covering the orthodontic aligner (4) at least partly with a barrier, setting a third stimulus condition for the orthodontic aligner (4) , and, after the orthodontic aligner (4) has adapted to the third stimulus condition, exerting pressure on at least part of the orthodontic aligner (4) to create a second alternative shape which is different from the first and the first alternative shape, and fixing the second alternative shape.

3. Method according to claim 1 or 2, wherein multiple alternative shapes are imparted consecutively to the orthodontic aligner (4).

4. Method according to one of claims 1 to 3, wherein the stimulus may be one or a combination of the group comprising temperature, humidity, radiation, UV-light, IR-light pH change, an electric field and a magnetic field.

5. Method according to one of claims 1 to 4, wherein the pressure is applied as a pneumatic pressure, a mechanical pressure and/or as a hydraulic pressure or a combination thereof which is directed to at least part of the orthodontic aligner (4).

6. Method according to one of claims 1 to 5, wherein fixing is done by cooling the orthodontic aligner (4) having an alternative shape, preferably with a cooling rate of at least 5 to 50°C/min.

7. Treatment apparatus for imparting at least one alternative shape to an orthodontic aligner (4), said apparatus comprising
- a treatment container (2), said treatment container having a pressure chamber (2a),
- a holder (6) for an orthodontic aligner (4),
- a barrier (3) to at least partly cover the orthodontic aligner (4),
- conditioning means (8, 10) for setting a stimulus condition for the orthodontic aligner (4), and
- pressure means (P2) for exerting pressure on at least part of the orthodontic aligner (4).

8. Treatment apparatus according to claim 7, said treatment apparatus (1) comprising fixing means (12) for fixing at least one alternative shape of the orthodontic aligner (4).

9. Treatment apparatus according to claim 7 or 8, wherein the holder (6) is designed to hold a model (7) onto which the orthodontic aligner (4) is placed.

10. Treatment apparatus according to at least one of claims 7 to 9, wherein the barrier (3) is one of a group comprising a diaphragm and a model showing a negative form of the alternative shape to be imparted.

11. Treatment apparatus according to at least one of claims 7 to 10, wherein the conditioning means (8, 10) is one or a combination of a group comprising heating means, means to adjust humidity in the treatment container, a source of UV-, IR- or microwave radiation, means to adjust a pH, means to create a magnetic field and means to create an electric field.

12. Treatment apparatus according to claim 7, wherein the pressure means (P2) are arranged to exert pressure onto the orthodontic aligner (4) across the barrier (3).

13. Treatment apparatus according to one of claims 8 to 12, wherein the fixing (12) means comprise cooling means.

14. Treatment apparatus according to one of claims 7 to 13, wherein the treatment apparatus (1) comprises at least one sensor (T1, T2, T3, WLS1, WLS2, PS1, FS1) to monitor temperature, humidity, pressure and /or radiation.

15. Treatment apparatus according to one of claims 7 to 14, wherein the treatment apparatus (1) comprises a control unit to control time, stimulus condition, pressure application and/or fixing of the orthodontic aligner (4).
